Europäisches Patentamt

**European Patent Office**

Office européen des brevets

(19)

(11) Veröffentlichungsnummer: **0 106 354**
**A2**

(12) **EUROPÄISCHE PATENTANMELDUNG**

(21) Anmeldenummer: **83110353.6**

(22) Anmeldetag: **17.10.83**

(51) Int. Cl.³: **G 06 K 9/48**

(30) Priorität: **19.10.82 DE 3238706**

(43) Veröffentlichungstag der Anmeldung:
**25.04.84 Patentblatt 84/17**

(84) Benannte Vertragsstaaten:
**AT CH DE FR LI**

(71) Anmelder: **SIEMENS AKTIENGESELLSCHAFT**
**Berlin und München Wittelsbacherplatz 2**
**D-8000 München 2(DE)**

(72) Erfinder: **Scherl, Wolfgang, Dipl.-Ing.**
**Kafkastrasse 54**
**D-8000 München 83(DE)**

(54) Verfahren zur Extraktion von Deskriptoren, vorzugsweise zur Darstellung von Druckvorlagen in Form von grössen- und drehlagenunabhängigen Bogenstrukturen zum Zwecke einer Dokumentenanalyse, insbesondere zur Schriftzeichenerkennung.

(57) Es wird ein Verfahren zur Extraktion von Deskriptoren, vorzugsweise zur Darstellung von Druckvorlagen in Form größen- und drehlagenunabhängigen Bogenstrukturen zum Zwecke einer Dokumentenanalyse, insbesondere zur Schriftzeichenerkennung, vorgeschlagen.

Das abzutastende Dokument wird unter mehreren Projektionsrichtungen abgetastet. Aus den Abtastergebnissen werden sog. Deskriptoren für unterschiedliche Grundmustertypen abgeleitet, die dann einem jeweils bereits abgetasteten Rand eines Symbols in der Vorlage zugeordnet werden. Die so entstehenden Bögen oder Ränder werden nach ihrer Fertigstellung in einen weiterverarbeitenden Prozeß eingeleitet.

FIG 1

EP 0 106 354 A2

0106354

SIEMENS AKTIENGESELLSCHAFT       Unser Zeichen
Berlin und München               VPA 82 P 1 9 5 2. E

Verfahren zur Extraktion von Deskriptoren, vorzugsweise zur Darstellung von Druckvorlagen in Form von größen- und drehlagenunabhängigen Bogenstrukturen zum Zwecke einer Dokumentenanalyse, insbesondere zur Schriftzeichenerkennung

Die vorliegende Erfindung bezieht sich auf ein Verfahren zur Extraktion von Deskriptoren, vorzugsweise zur Darstellung von Druckvorlagen in Form von größen- und drehlagenunabhängigen Bogenstrukturen zum Zwecke einer Dokumentenanalyse, insbesondere zur Schriftzeichenerkennung, wobei das Dokument außer Textbereichen auch Graphik- und/oder Bildbereiche enthalten kann, bei dem die Vorlage optoelektronisch, vorzugsweise mittels einer Videokamera, Abtastzeile für Abtastzeile abgetastet wird, wonach die in analoger Form entstehenden, die optoelektronische Abbildung der Vorlage repräsentierenden Signale mittels eines Entscheidungsvorgangs jeweils entweder einer einen "Weißwert" repräsentierenden Binärzahl, vorzugsweise "1" oder einer einen "Schwarzwert" repräsentierenden Binärzahl, vorzugsweise "0", zugeordnet werden, wobei jeweils die Daten einer aktuellen und der unmittelbar vorhergehenden Abtastzeile zwischengespeichert werden, wobei beim Abtasten einer neuen Zeile ein Vorwärtsrollen für die beiden jeweils zwischengespeicherten Abtastzeilen vorgenommen wird, wobei aus dem zwischengespeicherten "zweizeiligen Bildsignal" Mustergrundtypen nach ihrer Art und nach ihrer Lage bestimmt werden, wobei den bestimmten Mustergrundtypen Bedeutungen wie "Oberkante", "Unterkante",

Pap 1 Sti/19.10.1982

"Sattel", "Verzweigung" und "Flanke" zugeordnet werden und wobei die Deskriptoren als Stützwerte die Musterränder beschreiben, nämlich vorzugsweise an den Stellen, an denen Tangenten mit Normalen in 0°-, 45°-, 90°- und 135°-Richtung angelegt werden können.

Das Problem der Zerlegung einer Druckvorlage zu deren Analyse wurde bei bekannten Verfahren durch Filterungs- und Statistikvorgänge gelöst.

Der vorliegenden Erfindung liegt die Aufgabe zugrunde, ein Verfahren zu schaffen, das auf Filterungs- und Statistikvorgänge verzichtet und das rein digital arbeitet.

Diese Aufgabe wird durch ein Verfahren nach dem Oberbegriff des Patentanspruchs 1 gelöst, das dadurch gekennzeichnet ist, daß die Deskriptoren als Extremalpunkte des Randes bezüglich beliebig vorgegebener Tangentenrichtungen festgelegt werden, daß jeder Deskriptor als ein Tangentialpunkt des Randes bestimmt ist, der auf einem Randabschnitt sitzt, welcher bezüglich der vorgegebenen Tangentenrichtungen parallel verläuft, daß der Verlauf eines Randes durch vier dem jeweiligen Rand zugeordnete Listeneinträge gekennzeichnet wird, daß die betreffenden Listen die x-Koordinaten des Randes, Angaben über den Randzustand, die momentane Länge der Kante, nämlich den Randabschnitt, und eine Anschlußnummer enthalten, daß in diesen Listen bei den Mustergrundtypen "Oberkante" und "Verzweigung" die Einträge von Randzustand, Kantenlänge und Anschlußnummer für die beiden zugehörigen Ränder vorbelegt werden, daß bei den Mustergrundtypen "Unterkante" und "Sattel" die Listeneinträge der beiden zugehörigen Ränder abgeschlossen und die noch fehlenden Deskriptoren errechnet werden,

- 3 -      vpa 82 P 1952 E

daß aus diesen Listen der Anfang eines zu einer vorgegebenen Tangente parallelen Randabschnittes festgestellt wird, daß aus diesen Listen die Fortführung des
zur Tangente parallelen Randabschnittes festgestellt
wird, daß aus diesen Listen der Endpunkt eines zu einer
vorgegebenen Tangente parallelen Randabschnittes festgestellt wird, daß für den Endpunkt eines derartigen
Randabschnittes aus dem Randzustand und aus der Kantenlänge die genaue Deskriptoren-Position errechnet wird,
daß aus einer Anschlußnummernliste dem betreffenden Deskriptor eine Strukturinformation zugeordnet wird, daß
bei einem Kantenende der Randzustand entsprechend den
Deskriptorenzyklen neu festgelegt wird, daß bei dem
Kantenende die Kantenlänge neu, vorzugsweise auf 1,
festgelegt wird, daß bei dem Kantenende eine weiterführende Anschlußnummer in eindeutiger Art neu festgelegt wird, daß einem bestimmten Randzustand eine feste
Tangentenrichtung zugeordnet ist und daß bei einem
bestimmten Randzustand entlang des Randes nach einem
bestimmten Deskriptor des konvexen Zyklus und
gleichzeitig nach einem bestimmten alternativen
Deskriptor des konkaven Zyklus gesucht wird.

Die Erfindung bietet den Vorteil, daß eine Abtastvorlage
drehlagenunabhängig und größenunabhängig abgetastet
werden kann. Außerdem ist vorteilhaft, daß kein Bildspeicher für die gesamte Vorlage erforderlich ist. Das
Verfahren erlaubt außerdem vorteilhafterweise, daß eine
Vorlage in einem einzigen Durchlauf ohne Rückschritte in
dem Verfahrensablauf bearbeitet werden kann. Die nach
dem erfindungsgemäßen Verfahren extrahierten Deskriptoren werden zur Zerlegung der Vorlage in Text-,
Graphik- und/oder Bildbereiche, zur Graphikanalyse, zur
Schriftarterkennung und zur Schriftzeichenerkennung
weiterverwendet.

Gemäß einer Weiterbildung der vorliegenden Erfindung beschreibt die Liste der Anfänge bzw. Enden die X-Koordinaten linker bzw. rechter Musterränder, die von der momentanen Abtastzeile geschnitten werden. Jeder dieser Randlisten wird eine Randzustandsliste, eine Kantenlängenliste und eine Liste der aktuellen Randanschlußnummern zugeordnet. Die 8 Unterlisten einer Abtastzeile (4 Unterlisten der linken und 4 Unterlisten der rechten Ränder) sind durch einen gemeinsamen Index miteinander verbunden. Alle 8 Unterlisten besitzen die gleiche Anzahl von Einträgen.

Im folgenden wird die Erfindung anhand mehrerer, Ausführungsbeispiele für die Erfindung betreffender Figuren im einzelnen beschrieben.

Fig. 1 zeigt schematisch ein Blockschaltbild eines Ausführungsbeispiels für die vorliegende Erfindung, wobei ein Dokument DOK in an sich bekannter Weise von einer Kamera, vorzugsweise einer Videokamera K, Zeile für Zeile abgetastet wird. Nach Durchlaufen einiger Vorstufen, auf die weiter unten eingegangen wird, werden digitalisierte Bildsignale einem einzeiligen Bildspeicher SE zugeführt, von dem aus ein Ereignisrechner E die betreffenden Daten abruft, verarbeitet und einem Listensystem L1, L2, L3, L4 zuführt.

Fig. 2 zeigt schematisch ein Blockschaltbild mit Datenleitungen, die von den Listen L1 ... L4 kommen mit Datenleitungen, die zu den Listen L1 ... L4 gehen und verschiedenen Moduln SB, T, F, B, S und RF, sowie einer zu einer Fig. 3 führenden Datenleitung, über die extrahierte Deskriptoren DESKR an eine Anordnung von Verwaltungslisten und Datenlisten geliefert werden.

Fig. 3 zeigt eine schematisch dargestellte Anordnung von Datenlisten LERZ (Erzeugung), LEIN (Eintragen), ZUS (Zusammenfassen), AUS (Auslagern) und einen Randspeicher RS, der die Verwaltungslisten enthält.

Figur 4 zeigt den Aufbau der Verwaltungslisten. Die Verwaltungslisten bestehen aus einem Randanschlußmodul für Randanschlußdaten im Zyklussinn RAZ', einem Randanschlußmodul für die Verwaltung von Randanschlußnummern entgegen dem Zyklussinn RAZ, einen Verweismodul zum Verwalten der Daten im Zyklussinn VWZ und einen Verweismodul zum Verwalten der Daten entgegen dem Zyklussinn VWZ'.

Fig. 5 zeigt den Aufbau der Datenlisten zur Zwischenspeicherung der Art ART, der X-Koordinate X, der Y-Koordinate Y und der Verweisdaten im Zyklussinn VWZ.

Fig. 6 zeigt den Aufbau der Listen L1 ... L4, wobei eine Liste zur Speicherung der X-Koordinaten Rand RZ, eine Liste für die Randzustände RZL, eine Liste für die Kantenlängendaten KLL und eine Liste der Randanschlußnummern LRAN enthält.

Figur 7 zeigt eine schematische Darstellung eines Textsysmbols, das von Tangenten berührt wird, die senkrecht auf einer Normalen von 45° stehen, wobei die sich ergebenden zugehörigen Deskriptoren, nämlich T, F, S, B für "Oberkante", "Verzweigung", "Sattelpunkt" und "Unterkante" an den Tangentenberührungspunkten eingetragen sind.

Fig. 8 zeigt schematisch einen willkürlich festgelegten Umfang eines Symbols in der abzutastenden Vorlage mit eingetragenen Deskriptoren, die entlang der Außenlinie der gezeigten Fläche angeordnet sind.

Der durchgezogene Teil der Umfangslinie stellt dabei, wie ersichtlich, einen konvexen Bogen, der unterbrochen gezeichnete Teil einen konkaven Bogen dar.

Fig. 9 zeigt schematische Darstellungen jeweils eines konvexen oder eines konkaven Deskriptorzyklus mit angegebenen Deskriptoren sowie mit den zugehörigen Zyklusrichtungen für konvexe bzw. konkave Bögen.

Fig. 10 zeigt ein aus einer Vielzahl von Bildpunkten bestehendes Textsymbol in unterschiedlichen Drehlagen und/oder Größen mit den eingetragenen Deskriptorsymbolen. Es ist aus dieser Figur ersichtlich, daß sich die Verteilung des Deskriptoren entsprechend der Aufgabe der Erfindung trotz unterschiedlicher Drehlagen und trotz unterschiedlicher Größen nicht verändert.

Fig. 11 zeigt das Ergebnis der Zusammenfassung der Deskriptoren aus Fig. 10 zu konkaven und konvexen Bögen. Diese Figur zeigt, daß die entstandenen Datenstrukturen unabhängig von Größe und Drehlage sind.

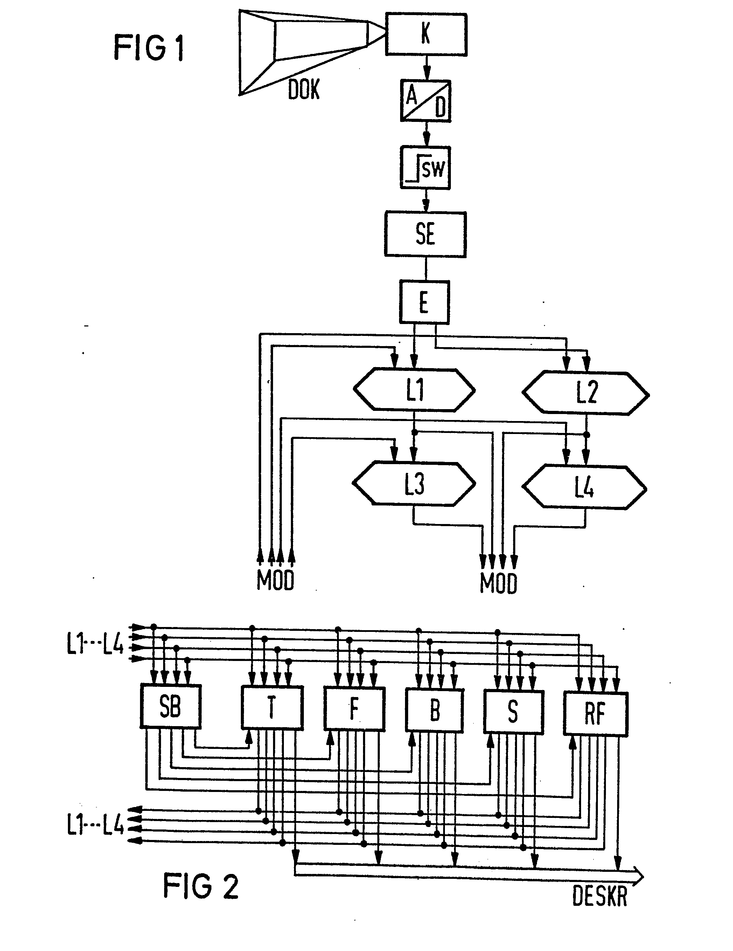

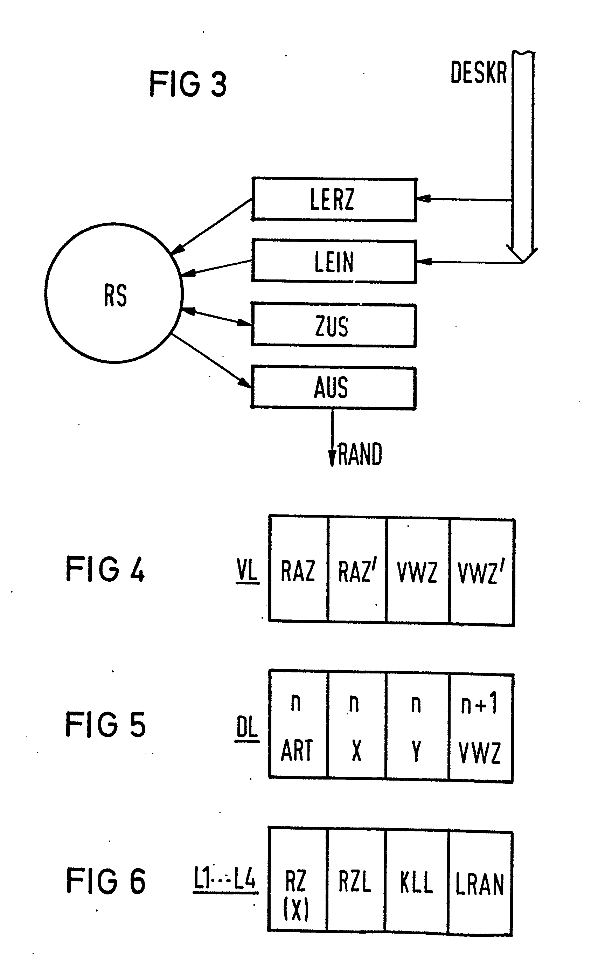

Wie bereits erläutert, zeigen Fig. 1, Fig. 2 und Fig. 3 schematische Darstellungen für ein Ausführungsbeispiel für die vorliegende Erfindung, wobei in Fig. 1 nach der das Dokument DOK abtastenden Kamera K ein A/D-Wandler und nach diesem eine Schwellenbeurteilungsschaltung SW, die mit dem einzeiligen Bildspeicher SE verbunden ist, von welcher aus ein Verbindung zu dem Ereignisrechner E besteht, angeordnet sind. In die Listen L1 ... L4 sind, wie zuvor erläutert, Listen einer Momentanzeile, Listen einer Vorgängerzeile, und zwar für linke Ränder, nämlich L1 und L3, sowie für rechte Ränder, nämlich L2, L4 enthalten. Die Listen L1 ... L4 sind in der gezeigten Art mit den Moduln in Fig. 2, nämlich SB, T, F, B, S und RF über Datenleitungen verbunden. In Fig. 2 ist zu erkennen, daß diese Moduln ihrerseits Datenleitungenverbindungen zu den Listen L1 ... L4 aufweisen. Eine Datenleitung für Deskriptoren ist im Vielfach mit den Moduln für "Oberkante" T, "Verzweigung" F, "Unterkante" B und "Sattelpunkte" S sowie dem Modul für die Randfortführung RF verbunden. Diese Datenleitung führt zu der in Fig. 3 gezeigten Anordnung von Rand(Bogen)speichern RS sowie mit diesen Randspeichern RS korrespondierenden Datenlisten zum Erzeugen von Rändern (Bögen) LERZ, zum Eintragen derselben LEIN, zum Zusammenfassen von Rändern (Bögen) ZUS und zum Auslagern von Rändern (Bögen) AUS. Hinter der letzten Datenliste, nämlich für das Auslagern AUS ist eine Anordnung zur weiterführenden Verarbeitung der Ränder (Bögen) vorzusehen, die nicht zum Gegenstand der vorliegenden Erfindung gehört.

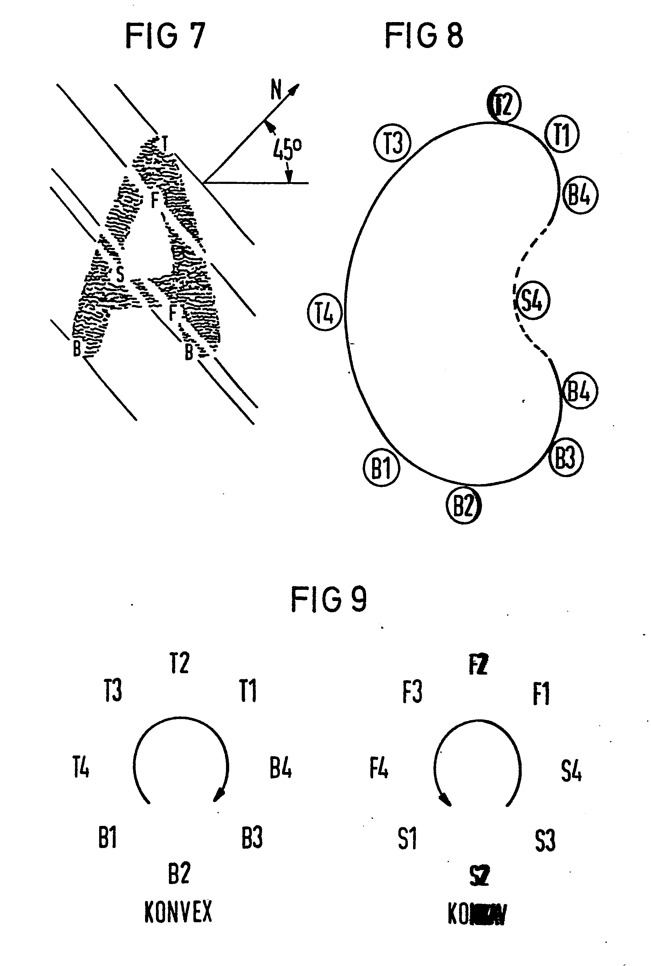

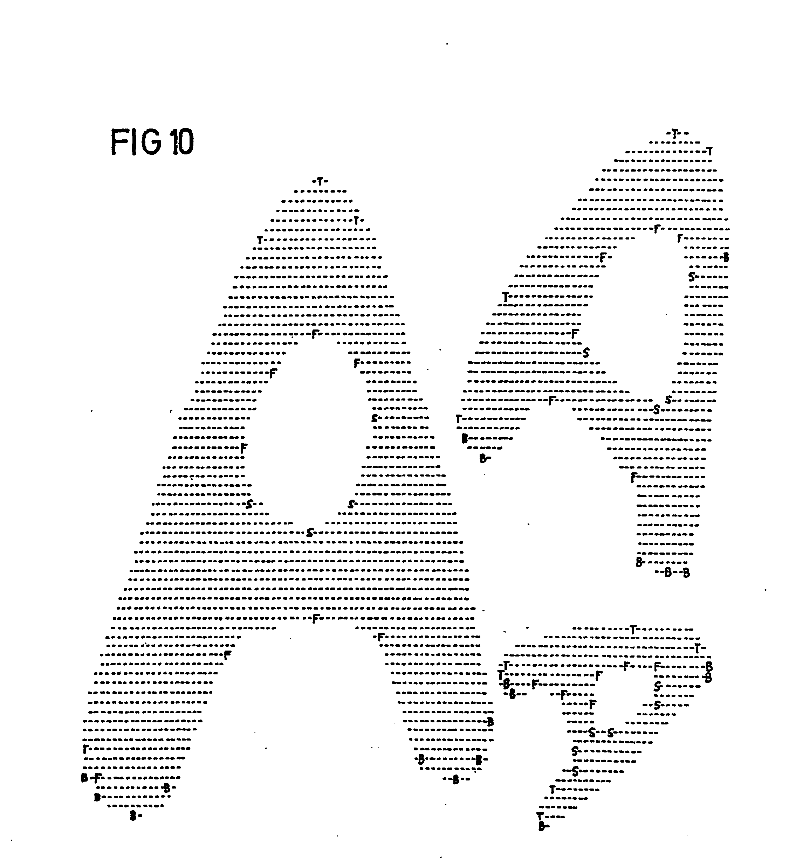

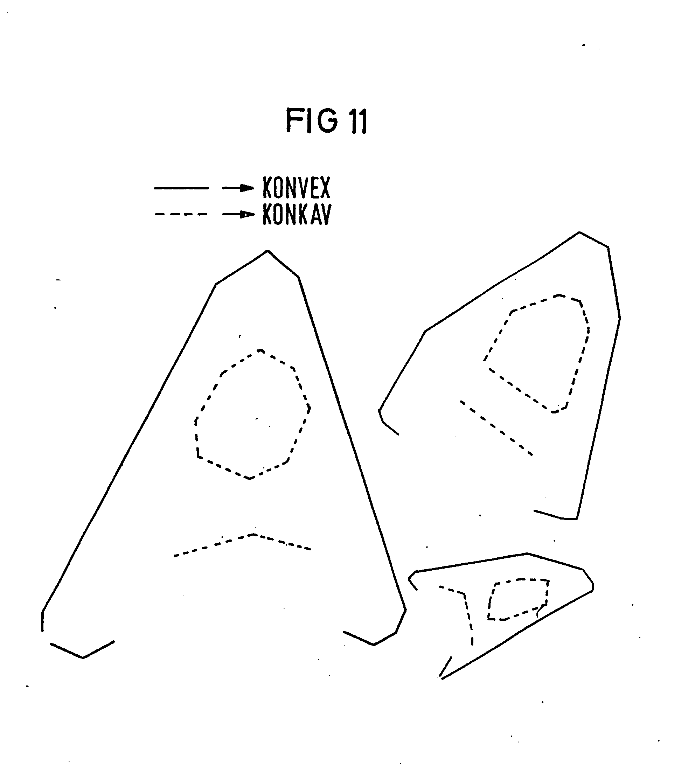

Die weiteren Figuren Fig. 4 bis Fig. 11 sind bereits oben in für die Offenbarung ausreichender Weise erläutert worden.

3 Patentansprüche
11 Figuren

Patentansprüche

1. Verfahren zur Extraktion von Deskriptoren, vorzugsweise zur Darstellung von Druckvorlagen in Form von größen- und drehlagenunabhängigen Bogenstrukturen zum Zwecke einer Dokumentenanalyse, insbesondere zur Schriftzeichenerkennung, wobei das Dokument außer Textbereichen auch Graphik- und/oder Bildbereiche enthalten kann, bei dem die Vorlage optoelektronisch, vorzugsweise mittels einer Videokamera, Abtastzeile für Abtastzeile, abgetastet wird, wonach die in analoger Form entstehenden, die optoelektronische Abbildung der Vorlage repräsentierenden Signale mittels eines Entscheidungsvorgangs jeweils entweder einer einen "Weißwert" repräsentierenden Binärzahl, vorzugsweise "1", oder einer einen "Schwarzwert" repräsentierenden Binärzahl, vorzugsweise "O", zugeordnet werden, wobei jeweils die Daten einer aktuellen und der unmittelbar vorhergehenden Abtastzeile zwischengespeichert werden, wobei beim Abtasten einer neuen Zeile ein Vorwärtsrollen für die beiden jeweils zwischengespeicherten Abtastzeilen vorgenommen wird, wobei aus dem zwischengespeicherten "zweizeiligen Bildsignal" Mustergrundtypen nach ihrer Art und nach ihrer Lage bestimmt werden, wobei den bestimmten Mustergrundtypen Bedeutungen, wie "Oberkante", "Unterkante", "Sattel", "Verzweigung" und "Flanke" zugeordnet werden und wobei die Deskriptoren als Stützwerte die Musterränder beschreiben, nämlich vorzugsweise an den Stellen, an denen Tangenten mit Normalen in 0°-, 45°-, 90°-, 135°-Richtung angelegt werden können, d a d u r c h   g e k e n n z e i c h n e t, daß die Deskriptoren als Extremalpunkte des Randes bezüglich beliebig vorgegebener Tangentenrichtungen festgelegt werden, daß jeder Deskriptor als ein Tangentialpunkt des Randes bestimmt ist, der auf einem Randabschnitt sitzt, welcher bezüglich der vorgegebenen Tangentenrichtung parallel verläuft, daß der Verlauf eines Randes durch vier dem jeweiligen Rand zugeordnete Listeneinträge gekennzeichnet wird, daß die betreffenden Listen die x-Koordinaten des Randes, Angaben über den Randzustand, die momentane Länge der Kante, nämlich den Randabschnitt und eine Anschlußnummer enthalten, daß in diesen Listen bei den Mustergrundtypen "Oberkante" (T) und "Verzweigung" (F), die Einträge von Randzustand, Kantenlänge und Anschlußnummer für die beiden zugehörigen Ränder vorbelegt werden, daß bei den Mustergrundtypen "Unterkante" (B) und "Sattel" (S) die Listeneinträge der beiden zugehörigen Ränder abgeschlossen und die noch fehlenden Deskriptoren errechnet werden, daß aus diesen Listen der Anfang eines zu einer vorgegebenen Tangente parallelen Randabschnittes festgestellt wird, daß aus diesen Listen die Fortführung des zur Tangente parallelen Randabschnittes festgestellt wird, daß aus diesen Listen der Endpunkt eines zu einer vorgegebenen Tangente parallelen Randabschnittes festgestellt wird, daß für den Endpunkt eines derartigen Randabschnittes aus dem Randzustand und aus der Kantenlänge die genaue Deskriptoren-Position errechnet wird, daß aus einer Anschlußnummernliste dem betreffenden Deskriptor eine Strukturinformation zugeordnet wird, daß bei einem Kantenende der Randzustand entsprechend den Deskriptorenzyklen neu festgelegt wird, daß bei dem Kantenende die Kantenlänge neu, vorzugsweise auf 1, festgelegt wird, daß bei dem Kantenende eine weiterführende Anschlußnummer in eindeutiger Art neu festgelegt wird, daß einem bestimmten Randzustand eine feste Tangentenrichtung zugeordnet ist und daß bei einem bestimmten Randzustand entlang des Randes nach einem bestimmten Deskriptor des konvexen Zyklus und gleichzeitig nach einem bestimmten alternativen Deskriptor des konkaven Zyklus gesucht wird.

2. Verfahren zur Extraktion von Deskriptoren, vorzugsweise zur Darstellung von Druckvorlagen, d a d u r c h g e k e n n z e i c h n e t , daß jeder Randliste eine Randzustandsliste, eine Kantenlängenliste und eine Liste der aktuellen Randanschlußnummern zugeordnet ist.

3. Verfahren zur Extraktion von Deskriptoren, vorzugsweise zur Darstellung von Druckvorlagen, d a d u r c h g e k e n n z e i c h n e t , daß acht Unterlisten einer Abtastzeile (vier Unterlisten der linken und vier Unterlisten der rechten Ränder) durch einen gemeinsamen Index miteinander verbunden sind, und daß alle acht Unterlisten die gleiche Anzahl von Einträgen aufweisen.

0106354

1/5

FIG 1

FIG 2

0106354

## FIG 3

```
                                    DESKR
              ┌─────────────┐
          ╱──→│    LERZ     │←──────────┐
         ╱     └─────────────┘           │
        ╱      ┌─────────────┐           ↓
  ⬤ ←───      │    LEIN     │←──────────
 ╱ RS ╲ ←─────└─────────────┘
 ╲    ╱ ←──   ┌─────────────┐
  ⬤    ╲  ╲─→ │    ZUS      │
         ╲    └─────────────┘
          ╲   ┌─────────────┐
           ╲─→│    AUS      │
              └─────────────┘
                    │
                    ↓ RAND
```

## FIG 4

| VL | RAZ | RAZ′ | VWZ | VWZ′ |
|----|-----|------|-----|------|

## FIG 5

| DL | n<br>ART | n<br>X | n<br>Y | n+1<br>VWZ |
|----|----------|--------|--------|------------|

## FIG 6

| L1···L4 | RZ<br>(X) | RZL | KLL | LRAN |
|---------|-----------|-----|-----|------|

0106354

# FIG 7

# FIG 8

N

45°

# FIG 9

T2
T3          T1

T4                    B4

B1          B3

B2

KONVEX

F2
F3          F1

F4                    S4

S1          S3

S2

KONKAV

FIG 10

0106354

FIG 11

——→ KONVEX
- - - -→ KONKAV